# EUROPEAN PATENT APPLICATION

(11) **EP 1 674 702 A1**
(43) Date of publication of application: **28.06.2006**
(21) Application number: 04030435.4
(22) Date of filing: 22.12.2004
(51) Int. Cl.: F02D 41/30, F02D 35/02, F02D 41/40

(54) **Combustion control for HCCI engine**

(71) Applicant: Ford Global Technologies, LLC., Dearborn MI 48126 (US)
(72) Inventor: Ström, Hans, 442 60 Kode (SE)
(74) Representative: Andersson, Per Rune

(57) **Abstract**

A method for controlling combustion timing in a direct injected homogenous charge compression ignition engine is presented. The engine comprises valve overlap control means (180,180'), fuel injection (FI) control means (130) and a combustion sensing means (140). The method is characterised by the steps of:
a. injecting an amount of fuel in an engine cylinder (100) during a negative valve overlap (NVO) period;
b. sensing a combustion timing in the cylinder during a period around top dead centre (TDC) following the negative valve overlap (NVO) period; and
c. adjusting the timing of the fuel injection (FI) by comparing the sensed combustion timing with a desired combustion timing.

## Description

### FIELD OF THE INVENTION

The present invention relates to a method for controlling combustion timing in a direct injected engine comprising a homogenous charge compression ignition mode. The engine comprises valve overlap control means, a fuel injection control means, and a combustion sensing means.

The invention also relates to a direct injected dual mode internal combustion engine, with a first mode where the engine runs in spark ignition mode, and a second mode where the engine runs in homogeneous charge compression ignition mode. The engine comprises at least one cylinder with at least one inlet valve and at least one outlet valve, a fuel injector opening in the cylinder, at least one variable valve actuating mechanism for controlling opening and closing of the at least one inlet valve and the at least one outlet valve. The fuel injector injects fuel in the cylinder during the homogeneous charge compression ignition mode, during a period of negative valve overlap.

### PRIOR ART

The major problem for engine manufacturers all over the world is to combine the features of low fuel consumption and low emissions of the legislated emissions uHC (unburned hydrocarbons), CO (carbon monoxide) and NOx (nitrogen oxides) in the same engine. Generally speaking, there are two extremes; spark ignition (SI) engines and compression ignition (CI) engines. SI engines do generally have very low emissions, whereas the fuel consumption is high, especially on low loads. CI engines have the lowest fuel consumption of all known transformers from chemical energy (fuel) to mechanical energy. The emissions from CI engines are however high, and this is especially true for NOx.

As can be understood, scientists, engine researchers and car manufacturers have tried to develop an engine combining the positive features of CI and SI engines. One promising way to is to use a combustion concept known as Homogeneous Charge Compression Ignition (HCCI). This combustion concept is also known as Activated Radical (AR) combustion or Active Thermo-Atmosphere Combustion, ATAC. Speaking in general terms, HCCI combustion uses a premixed, homogeneous charge, which is compressed during the compression stroke until it auto-ignites. Auto-ignition of the charge also occurs in SI engines, and is then referred to as "knock", which rapidly destroys engine components like the piston, and in worst case also the cylinder. There is however one major difference between HCCI combustion and SI engine "knock"; knock occurs in undiluted, premixed charges where the air/fuel ratio is close to one, i.e. a stoichiometric ratio where there is exactly so much oxygen that is needed to combust all fuel. Under such air/fuel ratios, an auto-ignited combustion becomes very fast (the mixture actually detonates), and will ruin engine components.

In an HCCI combustion, the reaction rate between the fuel and the air is slowed down by excessive fuel dilution by air and/or residual gases (i.e. exhausts), which gives a combustion that is sufficiently slow not to ruin engine components.

Engines running with HCCI combustion are known to be efficient (which leads to a low fuel consumption), and to produce very small amounts of NOx emissions.

Often, the NOx emissions from HCCI combustion are as low as 0.1 g/kWh (from SI and CI engines, the NOx emissions are often a hundred times higher).

One common way to achieve the necessary environment regarding in-cylinder temperature and combustion reaction intermediate content for the HCCI combustion initiation is to use a negative valve overlap, NVO. This means that the intake valve(s) close prior to gas exchange top dead centre and the exhaust valve(s) open after top dead centre, TDC. During the NVO, a small amount of fuel is injected.

This fuel will at least partly burn, which increases the temperature and the content of combustion reaction intermediates; as is well known by persons skilled in the art of HCCI combustion, a temperature increase during the NVO period is reflected by an earlier start of combustion during the main combustion, which takes place close to compression TDC.

The temperature increase during the NVO is not only limited by the amount of fuel, but also by the amount of oxygen; obviously, a small NVO traps less oxygen than large NVO does. Hence, there are solutions where the NVO can be varied for various required temperature increases.

In US-A-6 267 097, a combustion concept for an HCCI engine is described. The combustion concept includes use of a direct injection spark ignited (DISI) engine, which comprises an adjustable means for controlling valve overlap; during part load conditions, the valve overlap is set to a "negative" value, i.e. both the inlet valve(s) and the exhaust valve(s) are closed during the Gas Exchange Top Dead Centre (GETDC). This causes a temperature rise of the residual gas caught in the cylinder (which, due to lean combustion, contains oxygen), since the residual gas is compressed by the rising piston. During the NVO, a small amount of fuel is injected into the combustion chamber. The fuel will ignite due to the high temperature and presence of oxygen, hence forming combustion reaction intermediates and increase the temperature, which will help the main combustion (that takes place close to compression TDC) to auto-ignite.

Except from the above, the engine also comprises means to sense the position of the piston and the engine load. In conclusion, US-A-6 267 097 describes the basic features of HCCI combustion; the control of the combustion phasing is achieved by varying the amount of fuel injected during the negative valve overlap.

A major problem with the control method described in US-A-6 267 097 is that the amount of fuel injected during the NVO is very small. As is well known by persons skilled in the art, it is hard to accurately inject small amounts of fuel, since the fuel injectors have an un-linear characteristic at small injection amounts.

### SUMMARY OF THE INVENTION

As mentioned, a major problem with the prior art technique is the unlinear characteristic for fuel injectors that are controlled to inject small amounts of fuel. According to the invention, the present invention solves this problem by an injection method comprising the steps of
a. injecting an amount of fuel in an engine cylinder during a negative valve overlap (NVO) period;
b. sensing a combustion timing in the cylinder during a compression top dead centre, TDC, following the negative valve overlap period; and
c. adjusting the timing of the fuel injection responsive to a comparison of the sensed combustion timing and a desired combustion timing.

By means of the invention it is possible to adjust the combustion timing by adjusting the timing of the fuel injection towards earlier injection timing if the sensed combustion timing is later than the desired combustion timing, and vice versa.

Since some engines already are equipped with a pressure sensor, e.g. for determining combustion characteristics, it is beneficial if the combustion timing is sensed by the pressure sensor. This gives also a rather precise result regarding the combustion timing.

A more direct indication of the combustion timing can be obtained by an optical sensor.

Further, an ion-current sensor can be used. In some cases, this is very beneficial, since the spark plug can serve as ion-current sensor.

By using the method according to the invention, it is possible to use only one fuel injection per cycle. This is beneficial, since the unlinear region of the fuel injectors at small injected fuel amounts can be avoided.

In some cases it might be beneficial to control the negative valve overlap responsive to the information from the combustion sensing means, since it might be necessary to change the valve overlap period if the adjustment of the injection timing has reached a limit value.

Further, it might be beneficial if the HCCI combustion is helped being initiated by a spark, or a series of sparks, fired from a spark plug situated in the engine cylinder during the negative overlap period (NVO), and/or close to the compression top dead centre (TDC).

The problem with the prior art can also be solved by a duel mode combustion engine comprising combustion sensing means that is connected to an engine controller, which controls a fuel injection timing based on information from the combustion sensing means.

To be able to run the engine in spark ignition mode, it is beneficial if the engine comprises a throttle valve for controlling engine output in spark ignition (SI) mode. Since cam profile switching systems are a tested and reliable, it is advantageous if the overlap period is controlled by such a system.

### BRIEF DESCRIPTION OF THE DRAWINGS

In the following, the invention will be described with reference to the appended drawings, wherein
Fig. 1 is a schematic view of an HCCI engine comprising the control system according to the present invention,
Fig. 2 is a graph showing valve openings of a negative valve overlap,
Fig. 3 is a graph showing cylinder pressures for HCCI mode and SI mode, respectively, and
Fig. 4 is a graph showing CA50 values for different negative valve overlaps and injection strategies.

### DESCRIPTION OF PREFERRED EMBODIMENTS

Below, the invention will be described with help from some preferred embodiments. A list last in this section explains used acronyms.

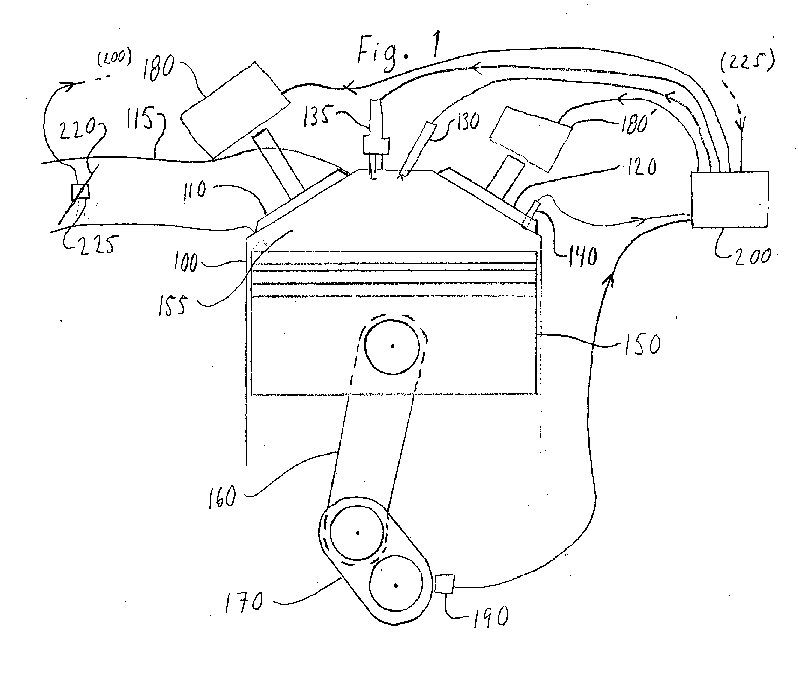

Fig.1 shows an engine cylinder 100, comprising at least one inlet valve 110, at least one outlet valve 120, a fuel injector 130, a spark plug 135, and a combustion sensing means 140, e.g. a pressure transducer, an ion current sensor, a crankshaft torque sensor, an optical sensor or the like, the function of which will be described later. The cylinder 100 is a part of an engine (not shown), which can comprise a multitude of cylinders, in various configurations, e.g. in-line, V, radial, boxer, or W configurations. The cylinder, together with a reciprocating piston 150, defines a combustion chamber 155 with a variable volume. The inlet valve(s) 110 connect the combustion chamber 155 with an inlet manifold 115, and the outlet valve(s) 120 connect the combustion chamber 155 with the atmosphere, generally through an exhaust system, which optionally comprises a turbocharger (not shown), which is connected to both the exhaust system and the inlet manifold 115, in a way well understood by persons skilled in the art. The piston 150 is connected to a connection rod 160, which in turn is connected to a crank shaft 170. The connection between the piston 150, the connection rod 160 and the crankshaft 170 is well known, and will hence not be further discussed.

The inlet valve(s)110 and the outlet valve(s) 120 are connected to valve actuating mechanisms 180 and 180', respectively. It is essential for the dual mode engine according to the invention that the valve actuating mechanism is variable, i.e. it should be possible to vary opening and/or closing times for the valve(s) with respect to a position of the crankshaft 170. The crankshaft position is directly connected to the volume of the combustion chamber 155.

In order to sense the position of the crankshaft 170, a crank angle encoder 190 is used. The crank angle encoder is connected to an engine controller 200.

As mentioned, the cylinder is provided with a combustion sensing means 140 for sensing combustion in the combustion chamber. The important feature of the combustion sensing means 140 is that it can determine when combustion occurs, and how fast a rate of heat release of the combustion is. Just like the crank angle encoder 190, the combustion sensing means 140 is also connected to the engine controller 200.

The engine 105 further includes a load controller, e.g. a throttle valve 220 placed in the inlet manifold 115, which throttle valve is fitted with a throttle sensor 225 that is connected to the engine controller 200.

The engine controller 200 is further connected to the valve actuating mechanisms 180 and 180', and controls these mechanisms responsive to signals from the combustion sensing means 140. The valve actuating means 180, 180' can be of many types; from a simple valve variable timing (VVT) mechanism, that only varies the position of the camshafts used in the valve actuating mechanism in relation to the crank shaft, to a completely controllable valve actuating mechanism where both valve opening timing, valve lift and duration can be controlled. Such completely controllable mechanisms may include hydraulic, electromagnetic and pneumatic valve actuating systems. Furthermore, mechanic systems can be used; such mechanic systems include, except from said VVT mechanisms, cam profile switching systems and collapsible valve actuators. Mechanisms and systems for valve actuation are well known by persons skilled in the art, and are only a part of the invention taken in conjunction with the invention as claimed in the appended claims.

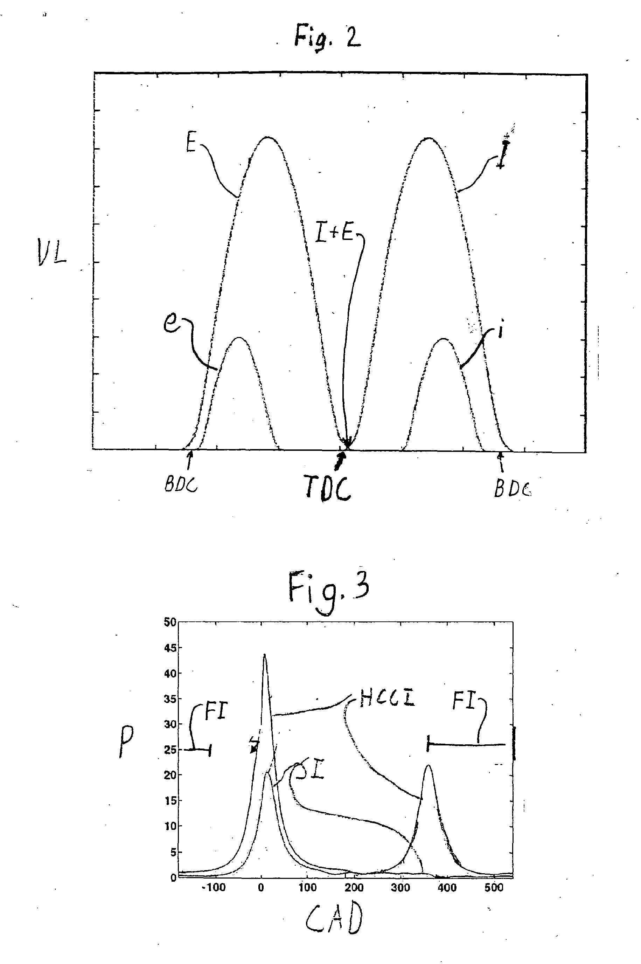

In Fig. 2, different valve lift (VL) curves for the exhaust valve(s) 120 and intake valve(s) 110 are shown as a function of crank angle degree (CAD) for SI combustion mode (represented by curves E and I; respectively), and for HCCI combustion mode (represented by curves e and i, respectively). For the HCCI combustion mode, there is a period around gas exchange top dead centre, GETDC, where neither the exhaust valve(s) 120 nor the intake valve(s) 110 are open, i.e. the NVO period.

In Fig 3, cylinder pressures for HCCI combustion (graph HCCI) and spark ignition (graph SI) are shown as a function of CAD. Further, a fuel injection FI, for the HCCI combustion is shown. The fuel injection FI reaches from about CAD=360 to about CAD=600. As can be seen, there are two pressure peaks during an engine cycle with HCCI; one high peak around CAD=0 (compression TDC) and one lower peak around CAD=360 (gas exchange TDC).

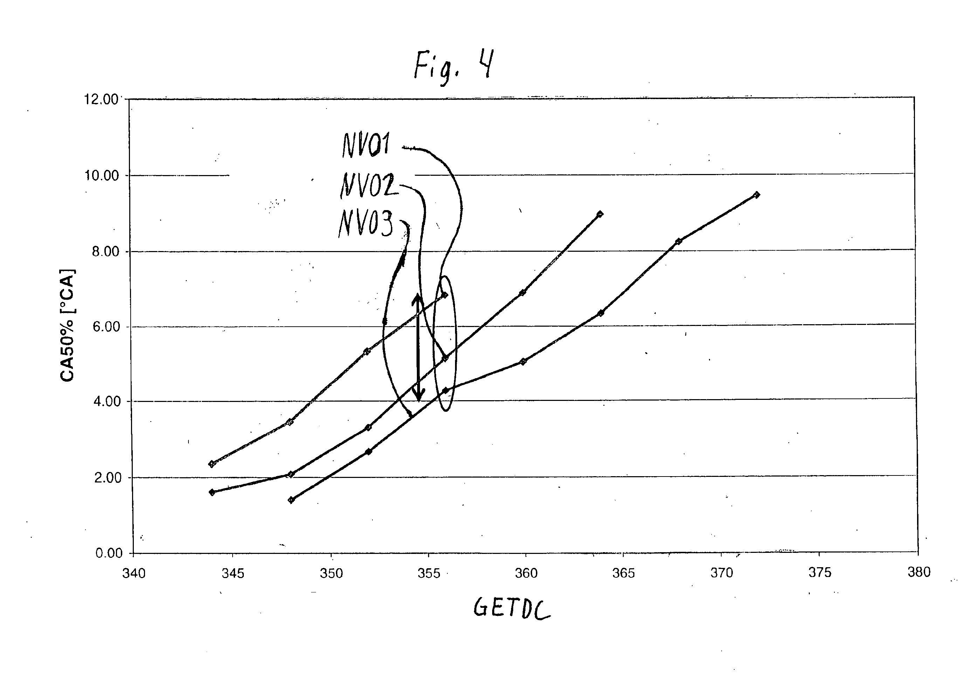

The effect of different amounts of NVO is shown in Fig. 4. Fig. 4 shows CA50-values, i.e. the crank angle degree where 50% of the fuel has burned, for three different NVO:s; NVO1, NVO2, and NVO3, respectively, as a function of injection timing for the fuel injection FI, wherein NVO3 is larger than NVO2, which is larger than NVO1. As can be seen, a large NVO leads to an early combustion, i.e. a smaller value for CA50, whereas a small NVO leads to a late combustion. It can also be seen that the earlier the injection, the faster the combustion. There is however a limit for how early the fuel can be injected, and still have an effect on the CA50 value; if the fuel is injected so early that all oxygen trapped in the cylinder during the NVO is consumed, no effect on the CA50 value can be achieved by injecting even earlier.

Hereinafter, the functions of the above components will be explained.

On idling and at high loads, the engine runs in SI mode with "standard" valve overlap, i.e. with a valve overlap according to the graphs E and I of fig. 2. In some cases it might be advantageous to run the engine with some NVO at idling load, depending on how sensible the SI combustion is to residual gases.

On "medium" loads, the engine is preferably run in HCCI mode, with an as large NVO as necessary. As mentioned, the engine controller 200 is connected to the valve actuating mechanisms 180, 180', and controls these mechanisms responsive to signals from the combustion sensing means 140.

As described in the prior art section, the temperature of the cylinder content during the NVO, which also controls the combustion timing around compression TDC, can be controlled by the *amount* of fuel that is injected in the cylinder during the NVO. After the NVO, fuel is injected to fuel the subsequent combustion around compression TDC. According to the invention, the temperature during NVO, and hence the combustion timing for the combustion close to TDC, is controlled by varying the *timing* of the fuel injection FI (see fig. 3); if the fuel is injected *early* in the NVO period, the combustion will continue until either all fuel or all oxygen is consumed. If the fuel is injected *late* during the NVO, the combustion is terminated by the temperature drop that results due to the decompression of the combustion gases during the later part of the NVO. By means of the invention, it is possible to use a *single* fuel injection during the NVO and inject *all* fuel that is necessary, both for the desired temperature increase during the NVO and the fuel that is to burn around compression TDC, by carefully controlling the timing of the injection; a late injection will give a small temperature increase of the cylinder content during the NVO; a late injection will also "save" a large proportion of the injected fuel and the oxygen for the combustion around compression TDC, since the combustion during the NVO, as mentioned, will terminate due to the temperature decrease due to the expansion (decompression) of the gases after GETDC, and not due to lack of oxygen and/or fuel.

In other words, the control method according to the present invention comprises the following steps;
a. injecting an amount of fuel in an engine cylinder 100 at least partly during a negative valve overlap NVO period;
b. sensing a combustion timing in the cylinder during a period around top dead centre TDC; and
c. adjusting the timing of the fuel injection FI responsive to a comparison of the sensed combustion timing and a desired combustion timing.

Hence, the fuel injection is adjusted towards earlier injection timing if the sensed combustion timing is later than the desired combustion timing, and vice versa. Using the timing of the fuel injection as control means, rather than the amount of fuel in a pilot injection, as is described in US-A-6 267 097, for controlling the temperature of the gases contained in the cylinder during the NVO, solves the problem stated in the "summary of invention" section, namely that it is difficult to control injections of small amounts of fuel with an injector with such large capacity that is necessary for high load fuel supply to the engine.

Above, it has been described that the fuel injected during the NVO auto-ignites due to the high temperature, and the presence of oxygen. It is however nothing that excludes that the spark plug is used to initiate the combustion during the NVO, either by being controlled to fire a single spark shortly after start of the fuel injection FI, or by a series of sparks. The spark plug can also be used to initiate the combustion around compression TDC.

Regarding the combustion sensing means 140, which measures the combustion timing, it can, as mentioned, be of many types; a preferred combustion sensing means is an ion-current sensor. An ion-current sensor is preferably connected to the spark plug; when no spark is fired from the spark plug, a voltage is applied between the electrodes of the spark plugs. Depending on the ion-concentration between the electrodes, a current will flow between the electrodes; this current can be measured, and correlates to the amount of fuel that has been combusted.

Further, an optical sensor can be used. An optical sensor preferably comprises an optical window in the cylinder wall. Light from the combustion can be measured through the window; since all combustion of hydrocarbon fuels emits light, the measured light can be used as a measure of the combustion. There might however be a problem with optical sensors on hydrogen powered engines, since hydrogen flames do not have any light emission.

A third option is to use a torque sensor connected to the crankshaft of the engine; depending on the pressure in the cylinder, which is strongly connected to the engine torque, an estimate of the combustion can be calculated.

A fourth option is to use the engine speed variations (which can be measured by the crank angle encoder 190) as a measure of the combustion timing. This is however regarded as a rather complicated method for determining combustion timing, and is, just like the torque sensor described above, certainly not easy to apply on engines comprising a multitude of cylinders, since the engines speed and torque variations become smaller the more cylinders that are connected to one crankshaft.

Another preferred method for determining the combustion timing is to calculate the combustion timing by information obtained from a pressure sensor and the crank angle encoder 190. This method for determining when a certain amount of the fuel has burned, i.e. the combustion timing, is well known by persons skilled in the art, and is described in "Internal combustion engine fundamentals", by John B Heywood, Mcgraw-Hill Education - Europe, UK, 1989 (ISBN 0071004998). As can be understood, the combustion timing can refer to any mass fraction burned, but for many reasons, the timing where 50% of the charge has burned is preferred; the combustion rate is fastest when around 50% of the fuel has burned, which makes the accuracy of that mass fraction burned the most precise.

The invention lies within using the information obtained from the calculation of burned fuel fraction for control of the engine combustion by varying the timing of the injection during the NVO; as have been described earlier, an early injection timing during the NVO leads to a higher temperature of the residual gases, which in turn leads to an earlier combustion. As is well known by persons skilled in the art, it is crucial for the engine efficiency that the combustion is correctly timed; both too early combustion and too late combustion leads to a non-optimal engine efficiency. Furthermore, a too early combustion can lead to increased emissions of nitrogen oxides, NOx, whereas a too late combustion often leads to increased emissions of unburned hydrocarbons, uHC, and carbon monoxide, CO.

It is also possible to obtain information about the fuel that bums during the NVO, in basically the same way as during the combustion around compression TDC. This information can also be used to control the injection timing and the injection duration at the NVO.

Above, the invention has been described for only one cylinder; it is however obvious for persons skilled in the art that any number of cylinders, e.g. one, two, three, four, five, six, eight, ten, twelve or eighteen in any configuration, could be used for an engine using the HCCI combustion control as it has been described herein.

### ABBREVIATIONS

- ATAC:: Active Thermo-Atmosphere Combustion
- CAD:: Crank angle degree, which is directly connected to the piston position.
- CO:: Carbon monoxide.
- DISI:: Direct injection, spark ignition.
- GETDC:: Gas exchange top dead centre.
- HCCI:: Homogeneous charge compression ignition.
- NOx:: Nitrogen oxide.
- NVO:: Negative valve overlap, i.e. both intake and exhaust valves are closed around gas exchange TDC.
- SI:: Spark ignition
- TDC:: Top Dead Centre, i.e. the crank angle position where the piston is at its highest position.
- uHC:: Unburned hydrocarbons.
- VVT:: Variable Valve Timing, i.e. the position of the crankshaft vis-à-vis the camshafts can be varied.

## Claims

1. Method for controlling combustion timing in a direct injected engine comprising a homogenous charge compression ignition mode, the engine comprising valve overlap control means (180, 180'), fuel injection (FI) control means (130) and a combustion sensing means (140), the method being **characterised by** the steps of:
a. injecting an amount of fuel in an engine cylinder (100) at least partly during a negative valve overlap (NVO) period;
b. sensing a combustion timing in the cylinder during a period around top dead centre (TDC); and
c. adjusting the timing of the fuel injection (FI) responsive to a comparison of the sensed combustion timing and a desired combustion timing.

2. The method according to claim 1, wherein the timing of the fuel injection is adjusted towards earlier injection timing if the sensed combustion timing is later than the desired combustion timing, and vice versa.

3. The method according to claim 1 or claim 2, wherein the combustion sensing means (140) is a pressure sensor.

4. The method according to claim 1 or claim 2, wherein the combustion sensing means (140) is an optical sensor.

5. The method according to claim 1 or claim 2, wherein the combustion sensing means (140) is an ion current sensor.

6. The method according to any of the preceding claims, wherein only one fuel injection (FI) per cycle is performed.

7. The method according to any of the preceding claims, further comprising the step of controlling the negative valve overlap (NVO) responsive to the information from the combustion sensing means (140).

8. The method according to any of the preceding claims, wherein a spark or a series of sparks is fired from a spark plug situated in the engine cylinder, during the negative overlap period (NVO), and/or close to the compression top dead centre (TDC).

9. A direct injected dual mode internal combustion engine, with a first mode where the engine runs in spark ignition (SI) mode, and a second mode where the engine runs in homogeneous charge compression ignition (HCCI) mode, the engine comprising at least one cylinder (100) with at least one inlet valve (110) and at least one outlet valve (120), a fuel injector (130) opening in the cylinder, at least one variable valve actuating mechanism (180, 180') for controlling opening and closing of the at least one inlet valve (180) and the at least one outlet valve (180'), wherein the fuel injector (130), during the homogeneous charge compression ignition mode, injects fuel in the cylinder (100) during a period of negative valve overlap (NVO), **characterised in that** a combustion sensing means (140) is connected to an engine controller (200), which controls the injection timing based on information from the combustion sensing means (140).

10. The direct injected dual mode internal combustion engine according to claim 9, wherein the combustion sensing means (140) is a pressure sensor.

11. The direct injected dual mode internal combustion engine according to claim 9, wherein the combustion sensing means (140) is an ion sensing probe, e.g. a spark plug.

12. The direct injected dual mode internal combustion engine according to claim 9, wherein the combustion sensing means (140) is an optical sensor.

13. The direct injected dual mode internal combustion engine according to any of the claims 9 to 12, further comprising a throttle valve (220) for controlling engine output in spark ignition mode.

14. The direct injected dual mode internal combustion engine according to any of the claims 9 to 13, wherein the variable valve actuating mechanism (180, 180') includes a cam profile switching system.

15. The direct injected dual mode internal combustion engine according to any of the claims 9 to 13, wherein the spark plug (135) is controlled to fire a single spark or a series of sparks during the negative valve overlap (NVO) period and/or close to a combustion close to a compression top dead centre (TDC).
